# EUROPEAN PATENT SPECIFICATION

(11) **EP 2 605 310 B1**
(45) Date of publication and mention of the grant of the patent: **06.05.2015**
(21) Application number: 12196837.4
(22) Date of filing: 12.12.2012
(51) Int. Cl.: H01M 2/10, H01M 2/34

(54) **Secondary battery module**
Sekundärbatteriemodul
Module de batterie secondaire

(30) Priority: 12.12.2011 KR 20110133286
(43) Date of publication of application: 19.06.2013
(73) Proprietor: Samsung SDI Co., Ltd., Yongin-si, Gyeonggi-do (KR); ROBERT BOSCH GMBH, 70442 Stuttgart (DE)
(72) Inventor: Byun, Sangwon, Gyeonggi-do (KR); Yoon, Haekwon, Gyeonggi-do (KR); Park, Zin, Gyeonggi-do (KR)
(74) Representative: Mounteney, Simon James

(56) References cited:
- EP-A2- 0 818 385
- WO-A1-2008/088308
- JP-A- 2011 071 097

## Description

### BACKGROUND

### 1. Field

The present invention relates to a secondary battery module.

### 2. Description of the Related Art

Generally, a large-capacity secondary battery module includes a plurality of battery cells connected to each other in series or parallel.

Each of the battery cells includes an electrode assembly having a positive electrode and a negative electrode positioned with a separator interposed therebetween, a case accommodating the electrode assembly, a cap plate coupled to the case and sealing the case, and a positive electrode terminal and a negative electrode terminal protruding from the cap plate and electrically connected to the electrode assembly.

In the secondary battery module, the respective battery cells are alternately arranged such that positive electrode terminals and negative electrode terminals of adjacent battery cells are alternated with each other and electrically connected to each other by bus bars.

In addition, the secondary battery module has a plurality of battery cells arranged in a line and two end plates positioned on the outermost surfaces of the battery cells, and the end plates are coupled to each other by a connection member, thereby fixing the plurality of battery cells in a secure manner.

However, a secondary battery module may be susceptible to damage of battery cells by distributing an externally applied force. Also, if the external force is applied to the end plates of the secondary battery module, the force applied to the battery cells may not be appropriately distributed.

JP 2011-071047 discloses a battery pack including a plurality of cells and having end plates which include a recessed part having an inclined surface.

### SUMMARY

The present invention sets out to provide a secondary battery module that is configured to maintain a stacked structure of battery cells in a secure manner when an external force is applied, while minimizing or reducing damage of the battery cells.

The present invention provides a secondary battery module according to claim 1.

The top surface and the bottom surface may be trapezoidal.

The pair of end plates may include a first end plate contacting a first outermost surface of the outermost surfaces at a first end of the plurality of battery cells; and a second end plate contacting a second outermost surface of the outermost surfaces at a second end of the plurality of battery cells opposite the first end.

The inclined plane of the first end plate and the inclined plane of the second end plate may be parallel with each other.

The inclined plane of the first end plate and the inclined plane of the second end plate may be not parallel with each other.

The inclined plane of the first end plate and the inclined plane of the second end plate may have a same angle of inclination with respect to the inner surfaces of the respective first and second end plates.

The inclined plane of the first end plate and the inclined plane of the second end plate may be symmetrical to each other with respect to the inner surfaces of the first and second end plates.

The inclined plane of the first end plate and the inclined plane of the second end plate may be inclined in a same direction with respect to the inner surfaces of the respective first and second end plates.

The inclined plane of the first end plate and the inclined plane of the second end plate may be inclined in different directions with respect to the inner surfaces of the respective first and second end plates.

The secondary battery module may be adapted for use as a motor-driving power source for propelling an electric vehicle or a hybrid electric vehicle.

According to an aspect of embodiments of the present invention, in a secondary battery module, a stacked structure of battery cells is maintained in a secure manner by installing end plates on opposite outermost surfaces of the battery cells.

According to another aspect of embodiments of the present invention, in a secondary battery module, since an inclined plane is further formed on each of the end plates, an external force applied to the end plate is distributed, and the external force transmitted to the battery cells is reduced accordingly, thereby minimizing or reducing damage of the battery cells. As such, a secondary battery module according to embodiments of the present invention is suited for application in an electric vehicle or a hybrid electric vehicle.

At least some of the above and other features of the invention are set out in the claims.

Additional aspects and/or advantages of the invention will be set forth in part in the description which follows and, in part, will be obvious from the description, or may be learned by practice of the invention.

### BRIEF DESCRIPTION OF THE DRAWINGS

The above and other features and aspects of the present invention will be made apparent to those of ordinary skill in the art by describing in detail some embodiments thereof with reference to the attached drawings, in which:
FIG. 1 is a perspective view of a secondary battery module according to an embodiment of the present invention;
FIG. 2 is a perspective view of an end plate of the secondary battery module of FIG. 1; and
FIG. 3 is a perspective view of a secondary battery module according to another embodiment of the present invention.

### DETAILED DESCRIPTION

Some embodiments of the present invention will be described more fully hereinafter with reference to the accompanying drawings; however, embodiments of the present invention may be embodied in different forms and should not be construed as limited to the embodiments illustrated and set forth herein. Rather, these embodiments are provided by way of example for understanding of the invention and to convey the scope of the invention to those skilled in the art. As those skilled in the art would realize, the described embodiments may be modified in various ways, all without departing from the scope of the present invention.

A secondary battery module according to an embodiment of the present invention is described below.

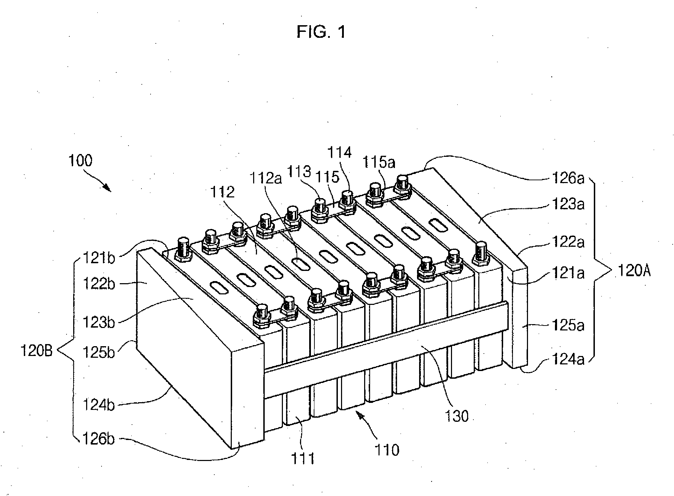

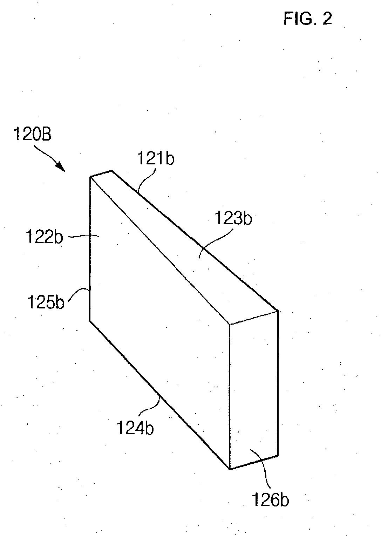

FIG. 1 is a perspective view of a secondary battery module according to an embodiment of the present invention, and FIG. 2 is a perspective view of an end plate of the secondary battery module shown in FIG. 1.

Referring to FIGS. 1 and 2, a secondary battery module 100 according to an embodiment of the present invention includes battery cells 110, end plates 120A and 120B, and a connection member 130.

The secondary battery module 100 according to this embodiment of the present invention includes a plurality of the battery cells 110 arranged in a direction (e.g., in a horizontal direction). The end plates 120A and 120B are positioned on outermost surfaces of the plurality of battery cells 110, respectively.

In this embodiment, the connection member 130 may be shaped as a rod or a bar, and is coupled to the end plates 120A and 120B at opposite sides of the plurality of battery cells 110 arranged in a line, thereby fixing the battery cells 110 in a secured manner.

Inclined planes 122a and 122b are respectively formed on outer surfaces of the end plates 120A and 120B. Thus, if an external force is applied to the end plates 120A and 120B in a substantially perpendicular direction, the external force is effectively distributed, thereby minimizing or reducing damage of the battery cells 110.

In this embodiment, each of the battery cells 110 includes a case 111, a cap plate 112, a first electrode terminal 113, and a second electrode terminal 114, and the battery cells 110 are electrically connected to each other by bus bars 115.

Each case 111 is formed of aluminum, an aluminum alloy, or another conductive metal, such as nickel-plated steel, and has a generally hexahedral shape having an opening through which an electrode assembly (not shown) is inserted and received in the case 111. An inner surface of the case 111 is insulated, thereby insulating the case 111 from the electrode assembly, the first electrode terminal 113, and the second electrode terminal 114.

A respective cap plate 112 seals the opening of each case 111 and may be formed of the same material as the case 111. The cap plate 112 may be coupled to the case 111 by laser welding. In this particular embodiment, the cap plate 112 has the same polarity as the second electrode terminal 114, and the cap plate 112 and the case 111 also have the same polarity. Each cap plate 112 has a respective safety vent 112a formed generally at a center region thereof and configured to be opened at a certain pressure (e.g., a predetermined pressure).

In each case, the first electrode terminal 113 is electrically connected to the electrode assembly and protrudes and extends a distance (e.g., a predetermined length) upwardly while penetrating the cap plate 112. The first electrode terminal 113 may be formed of a metal.

Each second electrode terminal 114 is electrically connected to the electrode assembly and protrudes and extends a distance (e.g., a predetermined length) upwardly while penetrating the cap plate 112. The second electrode terminal 114 may be formed of a metal. The first electrode terminal 113 may be a negative electrode and the second electrode terminal 114 may be a positive electrode, or vice versa.

In this embodiment, each of the bus bars 115 has through holes formed at opposite sides thereof. The through holes of the bus bar 115 are engaged with the first electrode terminals 113 and the second electrode terminals 114 of adjacent battery cells 110. The bus bars 115 connect the battery cells 110 to each other in series or in parallel. In this embodiment, the bus bars 115 engage the first electrode terminals 113 and the second electrode terminals 114 of adjacent battery cells 110 to be electrically connected to each other by means of nuts 115a.

The structures of the battery cells and bus bars are mere examples and the invention is equally applicable to a very wide variety of different battery cell types.

The end plates 120A and 120B include a first end plate 120A and a second end plate 120B. The end plates 120A and 120B are formed in a block or bulk type. In this embodiment, the end plates 120A and 120B may be formed of a material selected from the group consisting of metals, plastics, engineering plastics, and equivalents thereof, but embodiments of the present invention are not limited to the materials of the end plates 120A and 120B listed herein.

The end plates 120A and 120B include the first end plate 120A contacting an outermost surface of one of the battery cells 110, and the second end plate 120B contacting the outermost surface of another one of the battery cells 110. The first end plate 120A contacts and is closely held against one surface of one of the battery cells 110, and the second end plate 120B contacts and is closely held against one surface of another one of the battery cells 110.

The first end plate 120A has an inner surface 121a, an inclined plane 122a, a top surface 123a, a bottom surface 124a, a first side surface 125a, and a second side surface 126a. The top surface 123a and the bottom surface 124a of the first end plate 120A are each substantially trapezoidal. The inclined plane 122a is inclined at an angle with respect to the inner surface 121a.

The inner surface 121a contacts an outer surface of the outermost battery cell 110 at one side of the plurality of battery cells 110. In addition, the inclined plane 122a is formed on the surface (i.e. the outer surface) opposite the inner surface 121a. In this embodiment, the inclined plane 122a is inclined from one side to the other side.

The top surface 123a connects the inner surface 121a and the inclined plane 122a and, in this embodiment, is formed on a same plane as the cap plate 112 from which the first electrode terminal 113 and the second electrode terminal 114 protrude. The bottom surface 124a is positioned opposite the top surface 123a and, in this embodiment, the top surface 123a and the bottom surface 124a are formed to be parallel with each other.

The first side surface 125a connects the inner surface 121a, the inclined plane 122a, the top surface 123a, and the bottom surface 124a. The second side surface 126a is positioned opposite the first side surface 125a and, in this embodiment, is formed to be parallel with the first side surface 125a. In addition, like the first side surface 125a, the second side surface 126a connects the inner surface 121a, the inclined plane 122a, the top surface 123a, and the bottom surface 124a.

The second end plate 120B includes an inner surface 121b, an inclined plane 122b, a top surface 123b, a bottom surface 124b, a first side surface 125b, and a second side surface 126b. In this embodiment, the top surface 123b and the bottom surface 124b of the second end plate 120B are substantially trapezoidal. The inclined plane 122b is inclined at an angle with respect to the inner surface 121b.

The inner surface 121b contacts an outer surface of the outermost battery cell 110 at a side of the plurality of battery cells 110 opposite the first end plate 120A. The inclined plane 122b is formed on the surface (i.e. the outer surface) opposite the inner surface 121b and, in this embodiment, is inclined from one side to the other side.

The top surface 123b connects the inner surface 121 b and the inclined plane 122b and, in this embodiment, is formed on the same plane as the cap plate 112 from which the first electrode terminal 113 and the second electrode terminal 114 protrude. The bottom surface 124b is positioned opposite the top surface 123b and, in this embodiment, the top surface 123b and the bottom surface 124b are formed to be parallel with each other.

The first side surface 125b connects the inner surface 121b, the inclined plane 122b, the top surface 123b, and the bottom surface 124b. The second side surface 126b is positioned opposite the first side surface 125b and, in this embodiment, is formed to be parallel with the first side surface 125b. In addition, like the first side surface 125b, the second side surface 126b connects the inner surface 121 b, the inclined plane 122b, the top surface 123b, and the bottom surface 124b.

In this embodiment, the inclined plane 122a of the first end plate 120A and the inclined plane 122b of the second end plate 120B are formed to be parallel with each other. The inclined plane 122a of the first end plate 120A and the inclined plane 122b of the second end plate 120B are inclined in opposite directions with respect to the respective inner surfaces 121a and 121b with the same angle of inclination. When the respective inner surfaces 121 a and 121 b are not taken into consideration, the inclined plane 122a of the first end plate 120A and the inclined plane 122b of the second end plate 120B are inclined in the same direction.

As described above, since the inclined planes 122a and 122b are formed in the end plates 120A and 120B, safety of the secondary battery module 100 can be secured. Since the inclined planes 122a and 122b are formed in the end plates 120A and 120B, respectively, when an external force is applied to the end plates 120A and 120B in a substantially perpendicular direction, the external force is effectively distributed, thereby minimizing or reducing damage of the battery cells 110. As such, a secondary battery module according to the present invention is suited for application in an electric vehicle or a hybrid electric vehicle.

The connection member 130, shaped as a bar or rod, for example, fixes the end plates 120A and 120B together, and the plurality of battery cells 110 are thereby fixed in a secured manner. The connection member 130 may include one or more connection members to connect the end plates 120A and 120B to each other, thereby fixing the plurality of battery cells 110 between the end plates 120A and 120B in a secured manner.

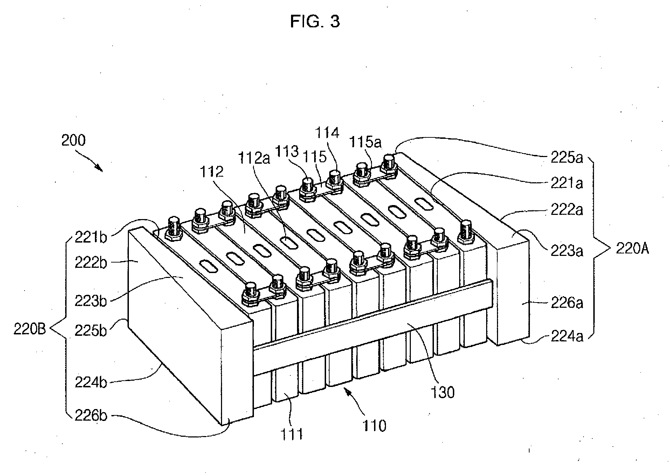

FIG. 3 is a perspective view of a secondary battery module according to another embodiment of the present invention.

Referring to FIG. 3, a secondary battery module 200 according to another embodiment of the present invention includes battery cells 110, end plates 220A and 220B, and the connection member 130.

The secondary battery module 200 has the end plates 220A and 220B arranged in a different manner than in the secondary battery module 100 described above and shown in FIGS. 1 and 2. Therefore, the secondary battery module 200 is described below with regard to the arrangement of the end plates 220A and 220B. In addition, components and features of the secondary battery module 200 which are the same or similar as those of the secondary battery module 100 described above and shown in FIGS. 1 and 2 are denoted by the same reference numerals and further detailed descriptions thereof will be omitted.

The end plates 220A and 220B of the secondary battery module 200 include a first end plate 220A and a second end plate 220B.

The first end plate 220A contacts an outer surface of an outermost one of the battery cells 110 at one side of the secondary battery module 200, and the second end plate 220B contacts an outer surface of another outermost one of the battery cells 110 at an opposite side of the secondary battery module 200.

The first end plate 220A, in this embodiment, includes an inner surface 221a, an inclined plane 222a, a top surface 223a, a bottom surface 224a, a first side surface 225a, and a second side surface 226a. The top surface 223a and the bottom surface 224a of the first end plate 220A are each substantially trapezoidal. The inclined plane 222a is inclined at an angle with respect to the inner surface 221a.

The inner surface 221a contacts an outer surface of the outermost battery cell 110 at one side of the secondary battery module 200. In addition, the inclined plane 222a is formed on the surface (i.e. the outer surface) opposite the inner surface 221 a and is inclined from one side to the other side.

The top surface 223a connects the inner surface 221 a and the inclined plane 222a and is formed on the same plane as the cap plate 112 from which the first electrode terminal 113 and the second electrode terminal 114 protrude. The bottom surface 224a is positioned opposite the top surface 223a and, in this embodiment, the top surface 223a and the bottom surface 224a are formed to be parallel with each other.

The first side surface 225a connects the inner surface 221a, the inclined plane 222a, the top surface 223a, and the bottom surface 224a. The second side surface 226a is positioned on a surface opposite the first side surface 225a and, in this embodiment, is formed to be parallel with the first side surface 225a. Like the first side surface 225a, the second side surface 226a connects the inner surface 221a, the inclined plane 222a, the top surface 223a, and the bottom surface 224a.

The second end plate 220B includes an inner surface 221b, an inclined plane 222b, a top surface 223b, a bottom surface 224b, a first side surface 225b, and a second side surface 226b. In this embodiment, the top surface 223b and the bottom surface 224b of the second end plate 220B are substantially trapezoidal. The inclined plane 222b is inclined at an angle with respect to the inner surface 221b.

The inner surface 221 b contacts an outer surface of an outermost battery cell 110 at a side of the secondary battery module 200 opposite the first end plate 220A. In addition, the inclined plane 222b is formed on the surface (i.e. the outer surface) opposite the inner surface 221b and, in this embodiment, is inclined from one side to the other side.

The top surface 223b connects the inner surface 221b and the inclined plane 222b and is formed on the same plane as the cap plate 112 from which the first electrode terminal 113 and the second electrode terminal 114 protrude. The bottom surface 224b is positioned on a surface opposite the top surface 223b and, in this embodiment, the top surface 223a and the bottom surface 224a are formed to be parallel with each other.

The first side surface 225b connects the inner surface 221b, the inclined plane 222b, the top surface 223b, and the bottom surface 224b. The second side surface 226b is positioned on a surface opposite the first side surface 225b and, in this embodiment, is formed to be parallel with the first side surface 225b. In addition, like the first side surface 225a, the second side surface 226b connects the inner surface 221b, the inclined plane 222b, the top surface 223b, and the bottom surface 224b.

In this embodiment, the inclined plane 222a of the first end plate 220A and the inclined plane 222b of the second end plate 220B are symmetrical to each other with respect to the respective inner surfaces 221a and 221b. That is, the inclined plane 222a of the first end plate 220A and the inclined plane 222b of the second end plate 220B are inclined in different directions at the same angle of inclination. Accordingly, in this embodiment, the inclined plane 222a of the first end plate 220A and the inclined plane 222b of the second end plate 220B are not parallel with each other.

As described above, since the inclined planes 222a and 222b are formed in the end plates 220A and 220B, safety of the secondary battery module 200 is secured. Since the inclined planes 222a and 222b are formed in the end plates 220A and 220B, respectively, when an external force is applied to the end plates 220A and 220B in a substantially perpendicular direction, the external force is effectively distributed, thereby minimizing or reducing damage of the battery cells 110.

Although the above embodiments show inclined planes which are inclined at similar angles, it is possible for them to be inclined at different angles. It is also possible for the end plates to have respective surfaces that each include planes or other contours having a plurality of aspects and orientations.

## Claims

1. A secondary battery module (100) comprising:
a plurality of battery cells (110) arranged in a first direction; and
first and second end plates (120A, 120B, 220A, 220B) respectively contacting outermost surfaces of the plurality of battery cells,
wherein each of the first and second end plates includes:
an inner surface (121a, 121b, 221a, 221b) contacting a respective one of the outermost surfaces;
an outer surface opposite the inner surface, wherein an inclined plane (122a, 122b, 222a, 222b) is formed on the outer surface;
a top surface (123a, 123b, 223a, 223b) connecting the inner surface and the inclined plane;
a bottom surface (124a, 124b, 224a, 224b) opposite and substantially parallel with the top surface;
a first side surface (125a, 125b, 225a, 225b) connecting the inner surface, the inclined plane, the top surface, and the bottom surface; and
a second side surface (126a, 126b, 226a, 226b) opposite and substantially parallel with the first side surface,
wherein the inclined plane is inclined with respect to the inner surface from one of the side surfaces to the other side surface.

2. A secondary battery module according to claim 1, wherein each of the top surface (123a, 123b, 223a, 223b) and the bottom surface (124a, 124b, 224a, 224b) are trapezoidal.

3. A secondary battery module according to claim 1 or 2, wherein:
the first end plate (120A, 220A) contacts a first outermost surface of the outermost surfaces at a first end of the plurality of battery cells; and
the second end plate (120B, 220B) contacts a second outermost surface of the outermost surfaces at a second end of the plurality of battery cells opposite the first end.

4. A secondary battery module according to any preceding claim, wherein the inclined plane (122a) of the first end plate (120A) and the inclined plane (122b) of the second end plate (121B) are parallel with each other.

5. A secondary battery module according to any one of claims 1 to 3, wherein the inclined plane (222a) of the first end plate (220A) and the inclined plane (222b) of the second end plate (220B) are not parallel with each other.

6. A secondary battery module according to any preceding claim, wherein the inclined plane (122a, 222a) of the first end plate (120A) and the inclined plane (122b, 222b) of the second end plate (120B) have the same angle of inclination with respect to the inner surfaces (121a, 121b, 221a, 221b) of the respective first and second end plates.

7. A secondary battery module according to any one of claims 1 to 3, or claim 5 or claim 6 when dependent upon claim 5, wherein the inclined plane (222a) of the first end plate (220A) and the inclined plane (222b) of the second end plate (220B) are symmetrical to each other with respect to the inner surfaces (221 a, 221 b) of the first and second end plates.

8. A secondary battery module according to any one of claims 1 to 6, wherein the inclined plane (122a) of the first end plate (120A) and the inclined plane (122b) of the second end plate (120B) are inclined in a same direction with respect to the inner surfaces (121 a, 121 b) of the respective first and second end plates.

9. A secondary battery module according to any one of claims 1 to 3, or claim 5 or claim 6 when dependent upon claim 5, or claim 7, wherein the inclined plane (222a) of the first end plate (220A) and the inclined plane (222b) of the second end plate (220B) are inclined in different directions with respect to the inner surfaces (221a, 221 b) of the respective first and second end plates.

10. A secondary battery module according to any preceding claim, wherein the secondary battery module is adapted for use as a motor-driving power source for propelling an electric vehicle or a hybrid electric vehicle.

## Patentansprüche

1. Sekundärbatteriemodul (100), das aufweist:
eine Vielzahl von Batteriezellen (110), die in einer ersten Richtung angeordnet sind; und
erste und zweite Endplatten (120A, 120B, 220A, 220B), die jeweils die äußersten Flächen der Vielzahl von Batteriezellen kontaktieren,
wobei eine jede der ersten und zweiten Endplatten umfasst:
eine innere Fläche (121a, 121b, 221a, 221b), die eine jeweilige der äußersten Flächen kontaktiert;
eine äußere Fläche entgegengesetzt der inneren Fläche, wobei eine geneigte Ebene (122a, 122b, 222a, 222b) auf der äußeren Fläche gebildet wird;
eine obere Fläche (123a, 123b, 223a, 223b), die die innere Fläche und die geneigte Ebene verbindet;
eine untere Fläche (124a, 124b, 224a, 224b) entgegengesetzt der und im Wesentlichen parallel zur oberen Fläche;
eine erste Seitenfläche (125a, 125b, 225a, 225b), die die innere Fläche, die geneigte Ebene, die obere Fläche und die untere Fläche verbindet; und
eine zweite Seitenfläche (126a, 126b, 226a, 226b) entgegengesetzt der und im Wesentlichen parallel zur ersten Seitenfläche,
wobei die geneigte Ebene mit Bezugnahme auf die innere Fläche von einer der Seitenflächen zur anderen Seitenfläche geneigt ist.

2. Sekundärbatteriemodul nach Anspruch 1, bei dem eine jede von oberer Fläche (123a, 123b, 223a, 223b) und unterer Fläche (124a, 124b, 224a, 224b) trapezförmig sind.

3. Sekundärbatteriemodul nach Anspruch 1 oder 2, bei dem:
die erste Endplatte (120A, 220A) eine erste äußerste Fläche der äußersten Flächen an einem ersten Ende der Vielzahl der Batteriezellen kontaktiert; und
die zweite Endplatte (120B, 220B) eine zweite äußerste Fläche der äußersten Flächen an einem zweiten Ende der Vielzahl der Batteriezellen entgegengesetzt dem ersten Ende kontaktiert.

4. Sekundärbatteriemodul nach einem der vorhergehenden Ansprüche, bei dem die geneigte Ebene (122a) der ersten Endplatte (120A) und die geneigte Ebene (122b) der zweiten Endplatte (121B) parallel zueinander sind.

5. Sekundärbatteriemodul nach einem der Ansprüche 1 bis 3, bei dem die geneigte Ebene (222a) der ersten Endplatte (220A) und die geneigte Ebene (222b) der zweiten Endplatte (220B) nicht parallel zueinander sind.

6. Sekundärbatteriemodul nach einem der vorhergehenden Ansprüche, bei dem die geneigte Ebene (122a, 222a) der ersten Endplatte (120A) und die geneigte Ebene (122b, 222b) der zweiten Endplatte (120B) den gleichen Neigungswinkel mit Bezugnahme auf die inneren Flächen (121a, 121b, 221a, 221b) der jeweiligen ersten und zweiten Endplatte aufweisen.

7. Sekundärbatteriemodul nach einem der Ansprüche 1 bis 3 oder Anspruch 5 oder Anspruch 6, wenn vom Anspruch 5 abhängig, bei dem die geneigte Ebene (222a) der ersten Endplatte (220A) und die geneigte Ebene (222b) der zweiten Endplatte (220B) mit Bezugnahme auf die inneren Flächen (221a, 221b) der ersten und zweiten Endplatte symmetrisch zueinander sind.

8. Sekundärbatteriemodul nach einem der Ansprüche 1 bis 6, bei dem die geneigte Ebene (122a) der ersten Endplatte (120A) und die geneigte Ebene (122b) der zweiten Endplatte (120B) mit Bezugnahme auf die inneren Flächen (121a, 121b) der eweiligen ersten und zweiten Endplatte in der gleichen Richtung geneigt sind.

9. Sekundärbatteriemodul nach einem der Ansprüche 1 bis 3 oder Anspruch 5 oder Anspruch 6, wenn vom Anspruch 5 abhängig, oder Anspruch 7, bei dem die geneigte Ebene (222a) der ersten Endplatte (220A) und die geneigte Ebene (222b) der zweiten Endplatte (220B) mit Bezugnahme auf die inneren Flächen (221a, 221b) der jeweiligen ersten und zweiten Endplatte in unterschiedlichen Richtungen geneigt sind.

10. Sekundärbatteriemodul nach einem der vorhergehenden Ansprüche, bei dem das Sekundärbatteriemodul für eine Verwendung als eine Motorantriebsstromquelle für das Antreiben eines Elektrofahrzeuges oder eines Hybridelektrofahrzeuges ausgebildet ist.

## Revendications

1. Module de batterie secondaire (100), comprenant :
plusieurs cellules de batterie (110), agencées dans une première direction ; et
des première et deuxième plaques d'extrémité (120A, 120B, 220A, 220B), contactant respectivement les surfaces externes extrêmes des plusieurs cellules de batterie ;
dans lequel chacune des première et deuxième plaques d'extrémité englobe :
une surface interne (121a, 121b, 221a, 221b), contactant une surface respective des surfaces externes extrêmes ;
une surface externe opposée à la surface interne, dans lequel un plan incliné (122a, 122b, 222a, 222b) est formé dans la surface externe ;
une surface supérieure (123a, 123b, 223a, 223b), connectant la surface interne et le plan incliné ;
une surface inférieure (124a, 124b, 224a, 224b) opposée et essentiellement parallèle à la surface supérieure ;
une première surface latérale (125a, 125b, 225a, 225b), connectant la surface interne, le plan incliné, la surface supérieure et la surface inférieure ; et
une deuxième surface latérale (126a, 126b, 226a, 226b), opposée et essentiellement parallèle à la première surface latérale ;
dans lequel le plan incliné est incliné par rapport à la surface interne, de l'une des surfaces latérales vers l'autre surface latérale.

2. Module de batterie secondaire selon la revendication 1, dans lequel chacune des surfaces, la surface supérieure (123a, 123b, 223a, 223b) et la surface inférieure (124a, 124b, 224a, 224b), est trapézoïdale.

3. Module de batterie secondaire selon les revendications 1 ou 2, dans lequel :
la première plaque d'extrémité (120A, 220A) contacte une première surface externe extrême des surfaces externes extrêmes au niveau d'une première extrémité des plusieurs cellules de batterie ; et
la deuxième plaque d'extrémité (120B, 220B) contacte une deuxième surface externe extrême des surfaces externes extrêmes au niveau d'une deuxième extrémité des plusieurs cellules de batterie, opposée à la première extrémité.

4. Module de batterie secondaire selon l'une quelconque des revendications précédentes, dans lequel le plan incliné (122a) de la première plaque d'extrémité (120A) et le plan incliné (122b) de la deuxième plaque d'extrémité (121B) sont parallèles l'un à l'autre.

5. Module de batterie secondaire selon l'une quelconque des revendications 1 à 3, dans lequel le plan incliné (222a) de la première plaque d'extrémité (220A) et le plan incliné (222b) de la deuxième plaque d'extrémité (220B) ne sont pas parallèles d'un à l'autre.

6. Module de batterie secondaire selon l'one quelconque des revendications précédentes, dans lequel le plan incliné (122a, 222a) de la première plaque d'extrémité (120A) et le plan incliné (122b, 222b) de la deuxième plaque d'extrémité (120B) forment le même angle d'inclinaison par rapport aux surfaces internes (121a, 121b, 221a, 221b) des première et deuxième plaques d'extrémité respectives.

7. Module de batterie secondaire selon l'une quelconque des revendications 1 à 3, ou selon les revendications 5 ou 6, dépendant de la revendication 5, dans lequel le plan incliné (222a) de la première plaque d'extrémité (220A) et le plan incliné (222b) de la deuxième plaque d'extrémité (220B) sont symétriques l'un à l'autre par rapport aux surfaces internes (221a, 221b) des première et deuxième plaques d'extrémité.

8. Module de batterie secondaire selon l'une quelconque des revendications 1 à 6, dans lequel le plan incliné (122a) de la première plaque d'extrémité (120A) et le plan incliné (122b) de la deuxième plaque d'extrémité (120B) sont inclinés dans une même direction par rapport aux surfaces internes (121a, 121b) des première et deuxième plaques d'extrémité respectives.

9. Module de batterie secondaire selon l'une quelconque des revendications 1 à 3, ou selon les revendications 5 ou 6, dépendant de la revendication 5 ou de la revendication 7, dans lequel le plan incliné (222a) de la première plaque d'extrémité (220A) et le plan incliné (222b) de la deuxième plaque d'extrémité (220B) sont inclinés dans des directions différentes par rapport aux surfaces internes (221a, 221b) des première et deuxième plaques d'extrémité respectives.

10. Module de batterie secondaire selon l'une quelconque des revendications précédentes, dans lequel le module de batterie secondaire est adapté pour être utilisé dans une source de puissance d'entraînement d'un moteur, pour propulser un véhicule électrique ou un véhicule électrique hybride.
